# EUROPÄISCHE PATENTANMELDUNG

(11) **EP 3 760 658 A1**
(43) Veröffentlichungstag der Anmeldung: **06.01.2021**
(21) Anmeldenummer: 19184068.5
(22) Anmeldetag: 03.07.2019
(51) Int. Cl.: C08G 18/28, C08G 18/42, C08G 18/79, C08G 18/80, C08G 63/199, C09D 167/00, C09D 175/06

(54) **BESTÄNDIGE 2K-PUR-BESCHICHTUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft Beschichtungsmittel enthaltend A) mindestens eine Polyolkomponente, B) mindestens eine, durch Umsetzung mindestens eines Polyisocyanats mit mindestens einem aminofunktionellen Alkoxysilan erhaltene Vernetzerkomponente mit freien und/oder blockierten Isocyanatgruppen, gegebenenfalls C) mindestens einen Katalysator zur Vernetzung von Silangruppen und D) gegebenenfalls weitere Hilfs- und Zusatzstoffe, dadurch gekennzeichnet, dass die Polyolkomponente A) mindestens ein Polyesterpolyol A1) umfasst, das unter Verwendung eines 2,2,4,4-Tetraalkylcyclobutan-1,3-diols (TACD) der allgemeinen Formel (I) 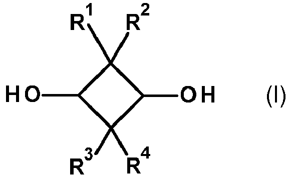 hergestellt wurde, in welcher die Reste R¹, R², R³ und R⁴ unabhängig voneinander für lineare oder verzweigte Alkylreste mit bis zu 8 Kohlenstoffatomen stehen. Die Erfindung betrifft außerdem die Verwendung der Beschichtungsmittel und Substrate, die mit erfindungsgemäßen Beschichtungsmitteln beschichtet sind.

## Beschreibung

Die Erfindung betrifft neue Beschichtungsmittel enthaltend Polyesterpolyole auf Basis von 2,2,4,4-Tetraalkylcyclobutan-1,3-diolen sowie Isocyanatgruppen und gleichzeitig Silangruppen aufweisende Vernetzerkomponenten, und die Verwendung dieser Beschichtungsmittel zur Herstellung von Beschichtungen, insbesondere von Klarlacken für die Automobillackierung, sowie die beschichteten Substrate.

Seit ihrer Einführung in die Automobilserienlackierung Mitte der 1980er Jahre haben Zweikomponenten-Polyurethan(2K-PUR)-Klarlacke aufgrund ihrer im Vergleich zu klassischen Acrylat/Melaminharz-Lacksystemen (Thermosetting Acrylics, TSA-Lacke) überlegenen technologischen Eigenschaften stetig an Marktanteilen gewonnen.

Die heutigen 2K-PUR-Klarlacke, die in der Regel hydroxyfunktionelle Poly(meth)acrylatharze als Bindemittel und aliphatische Polyisocyanate, insbesondere Derivate des Hexamethylendiisocyanats (HDI), als Vernetzerkomponenten enthalten, liefern Beschichtungen hoher mechanischer und chemischer Beständigkeit mit sehr guter Optik.

Trotz des bereits erreichten hohen Qualitätsniveaus der 2K-PUR-Lacke besteht im Markt ein beständiges Interesse an Beschichtungssystemen mit immer weiter verbesserten Eigen-schaften, insbesondere einer verbesserten Chemikalienbeständigkeit, wie gegenüber Lösemitteln und Baumharz, und Kratzfestigkeit.

Die WO 2010/090712, WO 2010/090714, WO 2010/090715 und WO 2016/187095 schlagen die Verwendung aliphatischer Polyester auf Basis von 2,2,4,4-Tetramethyl-l,3-cyclobutandiol (TMCD) als Bindemittelkomponente für lösemittelhaltige Beschichtungssysteme mit verbesserter Lösungsmittel- und Chemikalienbeständigkeit vor. Solche Polyesterpoylole reduzieren in Abmischungen mit Polyacrylatpolyolen zusätzlich auch die Viskosität des Gesamtsystems und ermöglichen so die Formulierung lösemittelärmerer Lacke. Gleichzeitig verschlechtert sich aufgrund der hohen Glasübergangstemperatur der TMCD-Polyester die Kratzbeständigkeit allerdings deutlich.

Wie jetzt überraschend gefunden wurde, zeigen 2K-PUR-Lacke, in denen Polyesterpolyole auf TACD-Basis mit speziellen Silangruppen enthaltenden Polyisocyanaten kombiniert vorliegen, gegenüber analogen Lacken, die mit Silangruppen-freien Polyisocyanaten vernetzt wurden, eine stark verbesserte Chemikalienbeständigkeit, insbesondere gegenüber Lösemitteln und Baumharz.

Gegenstand der vorliegenden Erfindung sind Beschichtungsmittel enthaltend
A) mindestens eine Polyolkomponente,
B) mindestens eine, durch Umsetzung mindestens eines Polyisocyanats mit mindestens einem aminofunktionellen Alkoxysilan erhaltene Vernetzerkomponente mit freien und/oder blockierten Isocyanatgruppen, gegebenenfalls
C) mindestens einen Katalysator zur Vernetzung von Silangruppen und
D) gegebenenfalls weitere Hilfs- und Zusatzstoffe,
dadurch gekennzeichnet, dass die Polyolkomponente A) mindestens ein Polyesterpolyol A1) umfasst, das unter Verwendung eines 2,2,4,4-Tetraalkylcyclobutan-1,3-diols (TACD) der allgemeinen Formel (I) 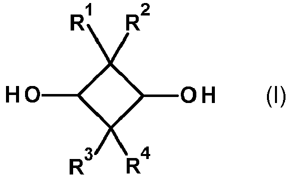 hergestellt wurde, in welcher die Reste R¹, R², R³ und R⁴ unabhängig voneinander für lineare oder verzweigte Alkylreste mit bis zu 8 Kohlenstoffatomen stehen.

Gegenstand der Erfindung ist auch die Verwendung dieser Beschichtungsmittel zur Herstellung von Polyurethanlacken, insbesondere zur Herstellung von Klarlacken für die Automobillackierung.

Erfindungsgemäß bedeuten die Bezugnahmen auf "umfassend", "enthaltend" usw. bevorzugt "im Wesentlichen bestehend aus" und ganz besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Die erfindungsgemäßen Beschichtungsmittel enthalten eine Polyolkomponente A), die mindestens ein Polyesterpolyol A1) umfasst, das unter Verwendung eines 2,2,4,4-Tetraalkylcyclobutan-1,3-diols (TACD) der allgemeinen Formel (I) 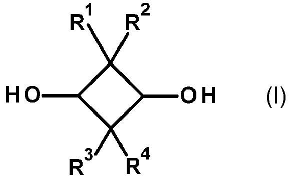 hergestellt wurde, in welcher die Reste R¹, R², R³ und R⁴ unabhängig voneinander für lineare oder verzweigte Alkylreste mit bis zu 8 Kohlenstoffatomen, vorzugsweise mit bis zu 6 Kohlenstoffatomen, besonders bevorzugt bis zu 4 Kohlenstoffatomen und ganz besonders bevorzugt für einen Methylrest stehen.

Derartige Polyesterpolyole A1) sind bekannt. Ihre Herstellung erfolgt in an sich bekannter Weise, beispielsweise nach den in WO 2010/090712, WO 2010/090714, WO 2010/090715 und WO 2016/187095 beschriebenen Verfahren, durch Umsetzung von TACD der allgemeinen Formel (I), gegebenenfalls unter Mitverwendung weiterer mehrwertiger Alkohole, mit unterschüssigen Mengen an mehrwertigen Carbonsäuren, entsprechenden Carbonsäureanhydriden oder entsprechenden Polycarbonsäureestern von niederen Alkoholen herstellen lassen.

Geeignete TACD zur Herstellung der erfindungsgemäß eingesetzten Polyesterpolyole A1) sind beispielsweise 2,2,4,4-Tetramethylcyclobutan-1,3-diol (TMCD), 2,2,4,4-Tetraethylcyclobutan-1,3-diol, 2,2,4,4-Tetra-n-propylcyclobutan-1,3-diol, 2,2,4,4-Tetra-n-butylcyclobutan-1,3-diol, 2,2,4,4-Tetra-n-pentylcyclobutan- 1,3-diol, 2,2,4,4-Tetra-n-hexylcyclobutan- 1,3-diol, 2,2,4,4-Tetra-n-heptylcyclobutan-1,3-diol, 2,2,4,4-Tetra-n-octylcyclobutan-1,3-diol, 2,2-Dimethyl-4,4-diethylcyclobutan-1,3-diol, 2-Ethyl-2,4,4-trimethylcyclobutan-1,3-diol, 2,4-Dimethyl-2,4-diethylcyclobutan-1,3-diol, 2,4-Dimethyl-2,4-di-n-propylcyclobutan-1,3-diol, 2,4-n-Dibutyl-2,4-diethylcyclobutan-1,3-diol, 2,4-Dimethyl-2,4-Diisobutylcyclobutan-1,3-diol und 2,4-Diethyl-2,4-diisoamylcyclobutan-1,3-diol. Besonders bevorzugtes Cyclobutandiol ist 2,2,4,4-Tetramethylcyclobutan-1,3-diol (TMCD).

Weitere mehrwertige Alkohole, die gegebenenfalls bei der Herstellung der Polyesterpolyole A1) mitverwendet werden können sind beispielsweise einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Oktandiole, 2-Ethyl-2-butyl-1,3-propandiol, 2-Ethyl-2-isobutyl-1,3-propandiol, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.02,6]decane, Di-Trimethylolpropan, 2,2-Bis(hydroxymethyl)-1,3-propandiol (Pentaerythrit), 2,2,6,6-Tetra-kis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester, oder Mischungen aus mindestens zwei solcher Alkohole.

Bei der Herstellung der Polyesterpolyole A1) können die TACD der genannten Art als alleinige Diolkomponente eingesetzt werden. Gegebenenfalls kommen jedoch noch weitere mehrwertigen Alkohole der genannten Art mit zum Einsatz, wobei die Mengen dieser weiteren mehrwertigen Alkohole so gewählt werden, dass der TACD-Anteil an der Gesamtmenge aus eingesetzten TACD und weiteren mehrwertigen Alkoholen mindestens 10 mol-%, vorzugsweise mindestens 35 mol-%, besonders bevorzugt mindestens 50 mol-%, ganz besonders bevorzugt mindestens 70 mol-% beträgt.

Geeignete Carbonsäuren bzw. Carbonsäurederivate zur Herstellung der in den erfindungsgemäßen Beschichtungsmittel einzusetzenden Polyesterpolyole A1) sind mehrwertige Carbonsäuren, deren Carbonsäureanhydride und Polycarbonsäureestern von niederen Alkoholen. Hierbei handelt es sich um beliebige aromatische, aliphatische oder cycloaliphatische, gesättigte oder ungesättigte Di- und Tricarbonsäuren oder deren Anhydride, insbesondere solche mit 4 bis 18 Kohlenstoffatomen, vorzugsweise mit 4 bis 10 Kohlenstoffatomen, wie z. B. Bernsteinsäure, Bernsteinsäureanhydrid, Glutarsäure, Adipinsäure, Pimelinsäure, Korksäure, Azelainsäure, Sebacinsäure, Decandicarbonsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure, Phthalsäureanhydrid, Isophthalsäure, Terephthalsäure, Trimellitsäure, Tetrahydrophthalsäureanhydrid, Terephthalsäuredimethylester und Terephthalsäure-bis-glykolester aber auch dimere und trimere Fettsäuren, die sowohl einzeln als auch in Form beliebiger Gemische untereinander verwendet werden können.

Bevorzugte Carbonsäuren bzw. Carbonsäurederivate zur Herstellung der Polyesterpolyole A1) sind Isophthalsäure und Adipinsäure.

Gegebenenfalls können zu Herstellung der Polyesterpolyole A1) in untergeordneter Menge auch Monocarbonsäuren mitverwendet werden, wie z. B. Benzoesäure, Essigsäure, Propionsäure, Buttersäure oder 2-Ethylhexansäure.

Geeignete Polyesterpolyole A1) für die erfindungsgemäßen Beschichtungsmittel sind auch solche, wie sie sich in an sich bekannter Weise aus Lactonen und TACD und gegebenenfalls weiteren mehrwertigen Alkoholen, wie z. B. den oben beispielhaft genannten, als Startermolekülen unter Ringöffnung herstellen lassen. Geeignete Lactone zur Herstellung dieser Polyesterpolyole A1) sind beispielsweise -Propiolacton, -Butyrolacton, - und -Valerolacton, -Caprolacton, 3,5,5- und 3,3,5-Trimethylcaprolacton oder beliebige Gemische solcher Lactone.

Die Herstellung dieser Lactonpolyester erfolgt im Allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Unabhängig vom Herstellverfahren und der Art der verwendeten Aufbaukomponenten weisen die in den erfindungsgemäßen Beschichtungsmittel eingesetzten, unter Verwendung TACD erhaltenen Polyesterpolyole A1) in der Regel einen Hydroxylgruppen-Gehalt von 1,5 bis 15 Gew.-%, vorzugsweise 2 bis 10 Gew.-%, besonders bevorzugt 2,4 bis 8 Gew.-%, ganz besonders bevorzugt 2,8 bis 6 Gew.-%, Säurezahlen von 0 bis 80 mg KOH/g, vorzugsweise von 0 bis 25 mg KOH/g, besonders bevorzugt von 2 bis 15 mg KOH/g, ganz besonders bevorzugt 2 bis 10 von 0 bis 25 mg KOH/g und zahlenmittlere Molekulargewichte (Mn) von 300 bis 10000 g/mol, vorzugsweise von 500 bis 6000 g/mol, besonders bevorzugt von 800 bis 5000 g/mol auf.

Die Glastemperatur Tg der Polyesterpolyole A1) beträgt in der Regel von - 35 bis 100°C, vorzugsweise von - 35 bis 60°C, besonders bevorzugt von - 35 bis 50°C.

Geeignete Polyesterpolyole A1) für die erfindungsgemäßen Beschichtungsmittel sind beispielsweise die unter dem Handelsnamen Eastman Tetrashield™ von Fa. Eastman Chemical Company, Kingsport, USA kommerziell erhältlichen Polyester auf Basis von 2,2,4,4-Tetramethylcyclobutan-1,3-diol (TMCD).

Neben den auf TACD basierenden Polyesterpolyolen A1) umfasst die Polyolkomponente A) der erfindungsgemäßen Beschichtungsmittel gegebenenfalls weitere, von A1) unterschiedliche Polyole A2).

Geeignete Polyole A2) sind beispielsweise die üblichen aus der Polyurethanchemie bekannten Polyhydroxylverbindungen, wie z. B. TACD-freie Polyesterpolyole, Polyetherpolyole, Polycarbonatpolyole und/oder Polyacrylatpolyole, oder beliebige Abmischungen solcher Polyole.

Geeignete TACD-freie Polyesterpolyole A2) sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole A2) geeignete Aufbaukomponenten sind - ausgenommen die TACD - beispielsweise die vorstehend für die Herstellung der Polyesterpolyole A1) als geeignet genannten mehrwertige Alkohole, mehrwertigen Carbonsäuren und deren Derivate, die auch in Form beliebiger Gemische eingesetzt werden können.

Die Herstellung von Polyesterpolyolen A2) kann nach an sich bekannten Methoden erfolgen, wie sie beispielsweise in E. Gubbels et al., Polyesters. In: Ullmann's Encyclopedia of Industrial Chemistry, Wiley-VCH Verlag GmbH & Co. KgaA; 2018. URL:https://doi.org/10.1002/14356007.a21_227.pub2 ausführlich beschrieben sind. Gegebenenfalls können dabei katalytische Mengen üblicher Veresterungskatalysatoren, wie z. B. Säuren, Basen oder Übergangsmetallverbindungen, wie z.B. Titantetrabutylat, zum Einsatz gelangen. Die Veresterungsreaktion wird im Allgemeinen in einem Temperaturbereich von ca. 80 bis 260°C, vorzugsweise von 100 bis 230°C, so lange durchgeführt bis die angestrebten Werte für Hydroxyl- und Säurezahl erreicht sind.

Geeignete Polyetherpolyole A2) sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole eingeschlossen der TACD, wie sie oben als geeignet für die Herstellung der Polyesterpolyole A1) beschrieben werden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polycarbonatpolyole A2) sind insbesondere die an sich bekannten Umset-zungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Geeignete Polycarbonatpolyole A2) sind auch solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere -Caprolacton, und anschließende Reaktion der dabei entstehenden Polyesterdiole mit Diphenyl- oder Dimethylcarbonat erhalten werden können. Ebenfalls geeignete Polycarbonatpolyole A2) sind solche, die neben Carbonatstrukturen zusätzlich Ethergruppen enthalten. Hierbei handelt es sich insbesondere um die an sich bekannten Polyethercarbonatpolyole, wie sie beispielsweise nach dem Verfahren der EP-A 2 046 861 durch katalytische Umsetzung von Alkylenoxiden (Epoxiden) und Kohlendioxid in Anwesenheit von H-funktionellen Startersubstanzen erhältlich sind.

Geeignete Polyacrylatpoylole A2) sind beispielsweise solche eines mittleren aus Funktionalität und Hydroxylzahl berechenbaren oder durch Gelpermeationschromatografie (GPC) bestimmbaren Molekulargewichtes von 800 bis 50000, vorzugsweise von 1000 bis 20000, mit einem Hydroxylgruppengehalt von 0,1 bis 12 Gew.-%, vorzugsweise 1 bis 10, wie sie sich in an sich bekannter Weise durch Copolymerisation Hydroxylgruppen aufweisender olefinisch ungesättigter Monomerer mit hydroxylgruppenfreien olefinischen Monomeren herstellen lassen.

Beispiele für geeignete Monomere zur Herstellung der Polyacrylatpolyole A2) sind Vinyl- bzw. Vinylidenmonomere wie z.B. Styrol, -Methylstyrol, o-bzw. p-Chlorstyrol, o-, m- oder p-Methylstyrol, p-tert.-Butylstyrol, Acrylsäure, Acrylnitril, Methacrylnitril, Acryl- und Methacrylsäureester von Alkoholen mit bis zu 18 Kohlenstoffatomen, wie z. B. Methylacrylat, Ethylacrylat, n-Propylacrylat, Isopropylacrylat, n-Butylacrylat, Isobutylacrylat, tert-Butylacrylat, Amylacrylat, Hexylacrylat, 2-Ethylhexylacrylat, Isooctylacrylat, 3,3,5-Trimethylhexylacrylat, Stearylacrylat, Laurylacrylat, Cyclopentylacrylat, Cyclohexylacrylat, 4-tert.-Butycyclohexylacrylat, Isobornylacrylat, Methylmethacrylat, Ethylmethacrylat, n-Propylmethacrylat, Isopropylmethacrylat, Butylmethacrylat, Isobutylmethacrylat, tert-Butylmethacrylat, Amylmethacrylat, Hexylmethacrylat, 2-Ethylhexylmethacrylat, Isooctylmethacrylat, 3,3,5-Trimethylhexylmethacrylat, Stearylmethacrylat, Laurylmethacrylat, Cyclopentylmethacrylat, Cyclohexylmethacrylat, 4-tert.-Butycyclohexylmethacrylat, Norbornylmethacrylat oder Isobornylmethacrylat, Diester der Fumarsäure, Itaconsäure oder Maleinsäure mit 4 bis 8 Kohlenstoffatome aufweisenden Alkoholen, Acrylsäureamid, Methacrylsäureamid, Vinylester von Alkanmonocarbonsäuren mit 2 bis 5 Kohlenstoffatomen, wie z. B. Vinylacetat oder Vinylpropionat, Hydroxyalkylester der Acrylsäure oder Methacrylsäure mit 2 bis 5 Kohlenstoffatomen im Hydroxyalkylrest, wie z. B. 2-Hydroxyethyl-, 2-Hydroxypropyl-, 3-Hydroxypropyl-, 3-Hydroxybutyl-, 4-Hydroxybutyl-, Trimethylolpropanmono- oder Pentaerythritmonoacrylat oder -methacrylat, sowie beliebige Gemische solcher beispielhaft genannter Monomere.

Bevorzugte Polyolkomponenten A2), die neben den Polyesterpolyolen A1) in den erfindungsgemäßen Beschichtungsmittel gegebenenfalls enthalten sein können, sind TADC-freie Polyesterpolyole, Polycarbonatpolyole und/oder Polyacrylatpolyole der genannten Art. Besonders bevorzugte Polyolkomponenten A2) sind Polyacrylatpolyole der genannten Art.

In der Polyolykomponente A) der erfindungsgemäßen Beschichtungsmittel liegen die TACDbasierten Polyesterpolyole A1) und die TACD-freien Polyolkomponenten A2) in solchen Mengen vor, dass der Anteil der Polyesterpolyole A1) an der gesamten Polyolkomponente A) mindestens 10 Gew.-%, vorzugsweise mindestens 30 Gew.-%, besonders bevorzugt mindestens 60 Gew.-%, ganz besonders bevorzugt mindestens 80 Gew.-% beträgt.

Die erfindungsgemäßen Beschichtungsmittel enthalten als Vernetzerkomponente B) mindestens ein freie und/oder blockierte Isocyanatgruppen aufweisendes Umsetzungsprodukt mindestens eines Polyisocyanats mit mindestens einem aminofunktionellen Alkoxysilan.

Geeignete Polyisocyanate zur Herstellung der Vernetzerkomponente B) sind beispielsweise beliebige Diisocyanate und/oder Polyisocyanate mit aliphatisch und/oder cycloaliphatisch gebundenen Isocyanatgruppen, die auf verschiedene Weise, beispielsweise durch Phosgenierung in der Flüssig- oder Gasphase oder auf phosgenfreien Weg, wie z. B. durch thermische Urethanspaltung, zugänglich sind. Bevorzugte aliphatische und/oder cycloaliphatische Diisocyanate sind solche des Molekulargewichtsbereichs 140 bis 400, wie z. B. 1,4-Diisocyanatobutan, 1,5-Diisocyanatopentan (Pentamethylendiisocyanat, PDI), 1,6-Diisocyanatohexan (HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan oder Mischungen aus mindestens zwei solcher Diisocyanate.

Geeignete Polyisocyanate zur Herstellung der Vernetzerkomponente B) sind auch beliebige, durch Modifizierung einfacher aliphatischer und/oder cycloaliphatischer Diisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind oder um Mischungen aus mindestens zwei solcher Polyisocyanate. Bei der Herstellung dieser Polyisocyanate schließt sich an die eigentliche Modifizierungsreaktion in der Regel ein weiterer Verfahrensschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Weitere geeignete Polyisocyanate zur Herstellung der Vernetzerkomponente B) sind auch beliebige Diisocyanate, Triisocyanate und/oder Polyisocyanate mit araliphatisch und/oder aromatisch gebundenen Isocyanatgruppen. Unter araliphatisch gebundenen Isocyanatgruppen werden im Sinne der vorliegenden Erfindung Isocyanatgruppen verstanden, die über einen gegebenenfalls verzweigten Alkylenrest, vorzugsweise einen Methylenrest, an einem aromatischen Ring gebunden sind, während unter aromatisch gebundenen Isocyanatgruppen solche verstanden werden, die direkt an einem aromatischen Ring gebunden vorliegen.

Geeignete derartige Polyisocyanate zur Herstellung der Vernetzerkomponente B) sind beliebige, auf verschiedene Weise, beispielsweise durch Phosgenierung in der Flüssig- oder Gasphase oder auf phosgenfreien Weg, wie z. B. durch thermische Urethanspaltung, zugängliche araliphatische und/oder aromatische Diisocyanate und Triisocyanate, vorzugsweise solche des Molekulargewichtsbereichs 160 bis 600, wie z. B. 1,3- und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (Toluylendiisocyanat, TDI), 2,3,5,6-Tetramethyl-l,4-diisocyanatobenzol, die isomeren Diethylphenylendiisocyanate, Diisopropylphenylendiisocyanate, Diisododecylpehnylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol, 4-Methyl-diphenylmethan-3,5,2',4',6'-pentaisocyanat oder Mischungen aus mindestens zwei solcher Diisocyanate.

Geeignete Polyisocyanate zur Herstellung der Vernetzerkomponente B) sind darüber hinaus die als "Polymer-MDI" bekannten mehrkernigen homologen des Diisocyanatodiphenylmethans.

Besonders geeignete aromatische Polyisocyanate zur Herstellung der Vernetzerkomponente B) sind die aus monomerem 2,4- und/oder 2,6-TDI durch Umsetzung mit Polyolen und/oder Oligomerisierung, vorzugsweise Trimerisierung, erhältlichen Polyisocyanate mit Urethan- und/oder Isocyanuratstruktur, die nach beliebigen bekannten Verfahren, beispielsweise den in DE-A 870 400, DE-A 953 012, DE-A 1 090 196, EP-A 0 546 399, CN 105218780, CN 103881050, CN 101717571, US 3 183 112, EP-A 0 416 338, EP-A 0 751 163, EP-A 1 378 529, EP-A 1 378 530, EP-A 2 174 967, JP 63260915 oder JP 56059828 beschriebenen, erhältlich sind oder um Mischungen aus mindestens zwei solcher Polyisocyanate.

Geeignete Polyisocyanate zur Herstellung der Vernetzerkomponente B) sind schließlich auch solche, die sowohl aromatische als auch aliphatische Isocyanatgruppen tragen, beispielsweise die in DE-A 1 670 667, EP-A 0 078 991, EP-A 0 696 606 und EP-A 0 807 623 beschriebenen gemischten Trimerisate bzw. Allophanate von 2,4- und/oder 2,6-TDI mit HDI.

Zur Herstellung der Vernetzerkomponente B) kommen bevorzugt Polyisocyanate mit aliphatisch und/oder cycloaliphatisch gebundenen Isocyanatgruppen zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% aufweisen, und/oder Polyisocyanate auf Basis von 2,4- und/oder 2,6-TDI mit Urethan- und/oder Isocyanuratstruktur, die einen Gehalt an monomeren Diisocyanaten von weniger als 1,5 Gew.-%, vorzugsweise weniger als 1,0 Gew.-%, besonders bevorzugt von weniger als 0,5 Gew.-%, bezogen auf den Festkörpergehalt des Polyisocyanats, aufweisen. Die Rest-Monomeren Gehalte werden nach DIN EN ISO 10283:2007-11 gaschromatographisch mit internem Standard gemessen.

Besonders bevorzugte Polyisocyanate zur Herstellung der Vernetzerkomponente B) sind Isocyanuratgruppen enthaltende Polyisocyanate der genannten Art mit aliphatisch und/oder cycloaliphatisch gebundenen Isocyanatgruppen sowie Isocyanurat und/oder Urethangruppen enthaltende TDI-Polyisocyanate, insbesondere monomerenarme Umsetzungsprodukte von 2,4- und/oder 2,6-TDI mit 1,1,1-Trimethylolpropan (TMP) und gegebenenfalls weiteren vorzugsweise niedermolekularen Alkoholen, wie z. B. Diethylenglykol.

Ganz besonders bevorzugte Polyisocyanate zur Herstellung der Vernetzerkomponente B) sind Polyisocyanate auf Basis von PDI, HDI, IPDI und/oder 4,4'-Diisocyanatodicyclohexylmethan.

Die vorstehend als Polyisocyanate zur Herstellung der Vernetzerkomponente B) als geeignet, bevorzugt, besonders bevorzugt und ganz besonders bevorzugt genannten Polyisocyanate weisen vorzugsweise eine mittlere NCO-Funktionalität von 2,3 bis 5,0, vorzugsweise von 2,5 bis 4,5, sowie einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-% auf.

Zur Herstellung der Vernetzerkomponente B) wird mindestens ein Polyisocyanat der genannten Art mit mindestens einem aminofunktionellen Alkoxysilan umgesetzt.

Geeignete aminofunktionelle Alkoxysilane sind beispielsweise Aminosilane, der allgemeinen Formel (11) 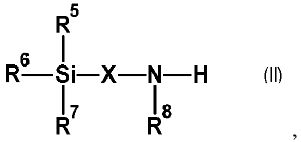 in welcher
- R⁵, R⁶ und R⁷: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht, der gegebenenfalls bis zu 2 Iminogruppen (-NH-) enthalten kann,
und
- R⁸: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 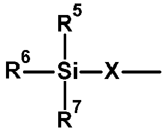 steht, in welchem R⁵, R⁶, R⁷ und X die vorstehend angegebene Bedeutung haben.

Geeignete Aminosilane der allgemeinen Formel (11) sind beispielsweise 3-Aminopropyltrimethoxysilan, 3-Aminopropyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyl-tris(methoxyethoxyethoxy) silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethylbis(trimethylsiloxy)silan, 11-Aminoundecyltrimethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimethoxysilan, 3-(3-Aminopropoxy)-3,3-dimethyl-1-propenyltrimethoxysilan, 3-Aminopropylmethylbis(trimethylsiloxy)-silan, 3-Aminopropyltris(trimethyl-siloxy)-silan, 3-Aminopropylpentamethyldisiloxan oder beliebige Gemisch solcher Aminosilane.

Bevorzugte Aminosilane der allgemeinen Formel (II), sind solche, in welcher
- R⁵, R⁶ und R⁷: jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R⁵, R² und R³⁷ für einen solchen Alkoxyrest steht,
- X: für einen linearen oder verzweigten Alkylenrest mit 3 oder 4 Kohlenstoffatomen steht, und
- R⁸: für einen gesättigten, linearen oder verzweigten, aliphatischen oder cycloaliphatischen Rest mit bis zu 6 Kohlenstoffatomen oder einen Rest der Formel 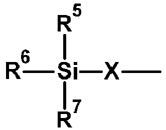 steht, in welchem R⁵, R⁶, R⁷ und X die vorstehend angegebene Bedeutung haben.

Besonders bevorzugte Aminosilane der allgemeinen Formel (II) sind solche, in welcher
- R⁵, R⁶ und R⁷: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁸: für einen linearen Alkylrest mit bis zu 4 Kohlenstoffatomen oder einen Rest der Formel 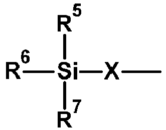 steht, in welchem R⁵, R⁶, R⁷ und X die vorstehend angegebene Bedeutung haben.

Ganz besonders bevorzugte Aminosilane der allgemeinen Formel (II) sind N-Methyl-3-aminopropyltrimethoxysilan, N-Methyl-3-aminopropyltriethoxysilan, N-(n-Butyl)-3-amino-propyltrimethoxysilan, N-(n-Butyl)-3-aminopropyltriethoxysilan, Bis(3-trimethoxysilylpropyl)-amin, Bis(3-triethoxysilylpropyl)amin oder Mischungen aus mindestens zwei solcher Aminosilane.

Geeignete Ausgangsverbindungen B) sind beispielsweise auch Aminosilane, der allgemeinen Formel (III) 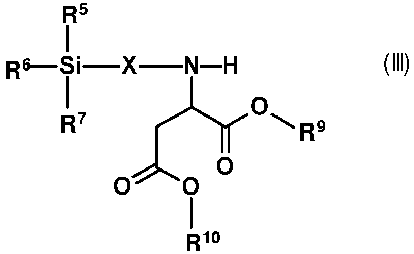 in welcher R⁵, R⁶ und R⁷ die für Formel (II) genannte Bedeutung haben,
- X: für einen linearen oder verzweigten organischen Rest mit mindestens 2 Kohlenstoffatomen steht und
- R⁹ und R¹⁰: unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Bei diesen Aminosilanen der allgemeinen Formel (III) handelt es sich um die bekannten silanfunktionellen Asparaginsäureester, wie sie sich nach der Lehre der EP-A 0 596 360 durch Umsetzung von primäre Aminogruppen tragenden Aminosilanen mit Fumarsäureestern und/oder Maleinsäureestern erhalten lassen.

Geeignete Ausgangsverbindungen zu Herstellung von Aminosilanen der allgemeinen Formel (III) sind daher grundsätzlich beliebige Aminosilane der allgemeinen Formel (II) 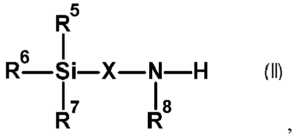 in welcher R⁵, R⁶, R⁷ und X die für Formel (II) genannte Bedeutung haben und R⁸ für Wasserstoff steht.

Diese werden mit Fumarsäurediestern und/oder Maleinsäurediestern der allgemeinen Formel (IV)

**R⁹OOC-CH=CH-COOR¹⁰** (IV)

umgesetzt, in welcher die Reste R⁹ und R¹⁰ für gleiche oder verschiedene Reste stehen und organische Reste mit 1 bis 18, vorzugsweise 1 bis 9, besonders bevorzugt 1 bis 4, Kohlenstoffatomen bedeuten.

Bevorzugte Aminosilane der allgemeinen Formel (III) sind Umsetzungsprodukte von Aminosilanen der allgemeinen Formel (II), in welcher
- R⁵, R⁶ und R⁷: jeweils Methyl, Methoxy und/oder Ethoxy bedeuten, mit der Maßgabe, dass mindestens einer der Reste R⁵, R⁶ und R⁷ für einen Methoxy- oder Ethoxyrest steht,
- X: für einen Propylenrest (-CH₂-CH₂-CH₂-) steht, und
- R⁸: für Wasserstoff steht,
mit
Fumarsäurediestern und/oder Maleinsäurediestern der allgemeinen Formel (IV), in welcher die Reste R⁹ und R¹⁰ für gleiche oder verschiedene Reste stehen und einen Methyl-, Ethyl-, n-Butyl- oder 2-Ethylhexylrest bedeuten.

Besonders bevorzugte Aminosilane der allgemeinen Formel (III) sind Umsetzungsprodukte von 3-Aminopropyltrimethoxysilan und/oder 3-Aminopropyltriethoxysilan mit Maleinsäurediethylester.

Geeignete aminofunktionelle Alkoxysilane zur Herstellung der Vernetzerkomponente B) sind beispielsweise auch Aminosilane, der allgemeinen Formel (V) 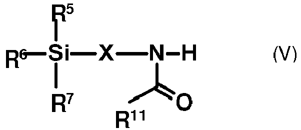 in welcher R⁵, R⁶ und R⁷ die für Formel (II) genannte Bedeutung haben,
- X: für einen linearen oder verzweigten organischen Rest mit mindestens 2 Kohlenstoffatomen und
- R¹¹: für einen gesättigten linearen oder verzweigten, aliphatischen oder cycloaliphatischen organischen Rest mit 1 bis 8 Kohlenstoffatomen steht.

Bei diesen Aminosilanen der allgemeinen Formel (V) handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkoholabspaltung erhalten lassen.

Geeignete Ausgangsverbindungen zu Herstellung von Aminosilanen der allgemeinen Formel (IV) sind daher grundsätzlich beliebige Aminosilane der allgemeinen Formel (II) 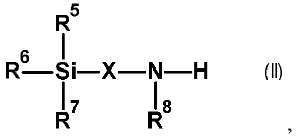 in welcher R⁵, R⁶, R⁷ und X die oben stehende Bedeutung haben und R⁸ für Wasserstoff steht.

Diese werden mit Alkylcarbonsäurealkylestern der allgemeinen Formel (VI)

**R¹¹-COOR¹²** (VI),

umgesetzt, in welcher
- R¹¹: für Wasserstoff oder einen gesättigten linearen oder verzweigten, aliphatischen oder cycloaliphatischen organischen Rest mit 1 bis 8 Kohlenstoffatomen und
- R¹²: für einen gesättigten aliphatischen organischen Rest mit 1 bis 4 Kohlenstoffatomen steht.

Bevorzugte Aminosilane der allgemeinen Formel (V) sind Umsetzungsprodukte von Aminosilanen der allgemeinen Formel (II), in welcher
- R⁵, R⁶ und R⁷: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁸: für Wasserstoff steht,
mit
Ameisensäurealkylestern der allgemeinen Formel (VI), in welcher
- R¹¹: für Wasserstoff und
- R¹²: für einen gesättigten aliphatischen organischen Rest mit 1 bis 4 Kohlenstoffatomen steht.

Besonders bevorzugte Aminosilane der allgemeinen Formel (V) sind Umsetzungsprodukte von 3-Aminopropyltrimethoxysilan und/oder 3-Aminopropyltriethoxysilan mit Methylformiat und/oder Ethylformiat.

Die Herstellung der Vernetzerkomponente B) aus mindestens einem Polyisocyanat mit mindestens einem aminofunktionellen Alkoxysilan ist prinzipiell bekannt. Sie kann beispielsweise nach einem der in WO 2008/074489, WO 2008/074490, WO 2010/149236, WO 2014/086530 oder WO 2009/156148 beschriebenen Verfahren durch Umsetzung bei Temperaturen von 20 bis 200 °C, vorzugsweise 30 bis 160 °C, besonders bevorzugt bei 35 bis 120°C, unter Einhaltung eines Äquivalentverhältnisses von Isocyanatgruppen zu gegenüber Isocyanaten reaktiven Gruppen von 50 : 1 bis 1,05 : 1, vorzugsweise von 20 : 1 bis 1,25 : 1, besonders bevorzugt 10 : 1 bis 1,5 : 1 erfolgen.

Die Umsetzung kann dabei ohne den Einsatz von Katalysatoren durchgeführt werden. Zur Beschleunigung der Umsetzung kann es aber von Vorteil sein, geeignete Katalysatoren mitzuverwenden. Geeignete Katalysatoren sind insbesondere die üblichen aus der Polyurethanchemie bekannten Katalysatoren, beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethyl-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat.

Bevorzugte einzusetzende Katalysatoren sind tertiäre Amine, Amidine und Zinnverbindungen der genannten Art.

Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)-dilaurat (DBTL).

Die beispielhaft genannten Katalysatoren können bei der Herstellung der Vernetzerkomponente B) einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren bezogen auf die Gesamtmenge der als Ausgangsverbindungen verwendeten Polyisocyanate und Silanverbindungen, zum Einsatz.

Die Herstellung der Vernetzerkomponente B) aus mindestens einem Polyisocyanat mit mindestens einem aminofunktionellen Alkoxysilan lösemittelfrei durchgeführt werden. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Der Verlauf der Umsetzung kann beim erfindungsgemäßen Verfahren durch z. B. titrimetrische Bestimmung des NCO-Gehaltes verfolgt werden.

Unabhängig von der Art und Menge der bei ihrer Herstellung eingesetzten Ausgangsverbindungen, dem mindestens einen Polyisocyanat und dem mindestens einen aminofunktionellen Alkoxysilan, stellen die Vernetzerkomponenten B) für die erfindungsgemäßen Beschichtungsmittel klare, praktisch farblose Silangruppen enthaltende Polyisocyanate, die in lösemittelfreier Form in der Regel Farbzahlen von unter 120 APHA, vorzugsweise von unter 80 APHA, besonders bevorzugt von unter 60 APHA, und einen NCO-Gehalt von 1,3 bis 24,9 Gew.-%, vorzugsweise 4,0 bis 23,5 Gew.-%, besonders bevorzugt 5,0 bis 21,0 Gew.-%, und eine mittlere NCO-Funktionalität von 1,0 bis 4,9, vorzugsweise von 1,8 bis 4,8, besonders bevorzugt von 2,0 bis 4,0 aufweisen.

Bevorzugte Vernetzerkomponenten B) für die erfindungsgemäßen Beschichtungsmittel sind Umsetzungsprodukte von Polyisocyanuratpolyisocyanaten auf Basis von PDI und/oder HDI mit N-(n-Butyl)-3-aminopropyltrimethoxysilan, Bis(3-trimethoxysilylpropyl)-amin oder Gemischen von N-(n-Butyl)-3-aminopropyltrimethoxysilan und Bis(3-trimethoxysilylpropyl)-amin in einem molaren Verhältnis von 2,5 : 97,5 bis 97,5 : 2,5, insbesondere von 5 : 95 bis 95 : 5, vorzugsweise von 10 : 90 bis 90 : 10, besonders bevorzugt von 20 : 80 bis 80 : 20, ganz besonders bevorzugt von 30 : 70 bis 70 : 30, bei denen 5 bis 95 %, vorzugsweise 10 bis 90 %, besonders bevorzugt 15 bis 85 % der ursprünglich im Polyisocyanat vorliegenden Isocyanatgruppen zu Harnstoffgruppen umgesetzt wurden.

Gegebenenfalls können die Vernetzerkomponenten B) auch in mit aus der Polyurethanchemie an sich bekannten Isocyanatblockierungsmitteln blockierter Form in den erfindungsgemäßen Beschichtungsmittel im Sinne von Einkomponenten-PUR-Einbrennsystemen eingesetzt werden. Geeignete Blockierungsmittel hierfür sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, -Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Die erfindungsgemäßen Beschichtungsmittel enthalten mindestens einen Katalysator C) zur Vernetzung von Silangruppen. Hierbei handelt es sich um beliebige Verbindungen, die in der Lage sind, die Hydrolyse und Kondensation von Alkoxysilangruppen oder bevorzugt die thermisch induzierte Silankondensation zu beschleunigen.

Geeignete Katalysatoren C) sind beispielsweise Säuren, wie z. B. organische Carbonsäuren, Schwefelsäure, p-Toluolsulfonsäure, Trifluormethansulfonsäure, Dodecylbenzolsulfonsäure, Essigsäure, Trifluoressigsäure, Phosphorsäuremonoester und Phosphorsäurediester, wie z. B. Dibutylphosphat, Phosphorsäure-2-ethylhexylester, Phosphorsäurephenylester und Phosphorsäure-bis(2-ethylhexyl)ester, sowie Phosphonsäurediester und Diphosphonsäurediester, wie sie z. B. in der WO 2007/033786 beschrieben sind.

Als Katalysatoren C) ebenfalls geeignet sind auch Basen, wie z. B. die N-substituierten Amidine 1,5-Diazabicyclo[4.3.0]non-5-en (DBN) und 1,5-Diazabicyclo[5.4.0]undec-7-en (DBU), oder auch Metallsalze und Metallchelate, wie z. B. Tetraisopropyltitanat, Tetrabutyltitanat, Titan(IV)acetylacetonat, Aluminium-tri-sec-butylat, Aluminiumacetylacetonat, Aluminiumtriflat, Zinntriflat oder Zirkonethylacetoacetat, wie sie z. B. in WO 2006/042658 beschrieben sind.

Geeignete Katalysatoren C) sind auch Phosphorsäure- und Phosphonsäureester der oben genannten Art, die in mit Aminen, vorzugsweise mit tertiären Aminen blockierter Form vorliegen. Besonders bevorzugte Katalysatoren dieses Typs sind solche, die im Temperaturbereich der Aushärtung von Automobildeck- und -klarlacken, beispielsweise im Bereich von 100 bis 150°C unter Abspaltung des Blockierungsamins die sauren Phosphorsäure- und Phosphonsäureester wieder freisetzen, die die eigentlich wirksame Katalysatoren darstellen. Geeignete aminblockierte Phosphorsäurekatalysatoren C) sind beispielsweise in WO 2008/074489 und WO 2009/077180 beschrieben.

Ebenfalls geeignete Katalysatoren C) sind organische Sulfonsäuren der oben genannten Art, die in blockierter Form, beispielsweise in amin-neutralisierter Form oder als Addukt an Epoxiden, wie in der DE 2 356 768 B1 beschrieben, eingesetzt werden und oberhalb von 100°C die katalytisch aktiven Sulfonsäuren wieder freisetzen.

Weitere zur Vernetzung von Silangruppen geeignete Katalysatoren C) sind auch Tetraalkylammoniumcarboxylate, wie z. B. Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammonium-benzoat, Tetrabutylammoniumformiat, Tetrabutylammoniumacetat, Tetrabutylammoniumpropionat, Tetrabutylammoniumbutyrat und/oder Tetrabutylammoniumbenzoat.

Zur Vernetzung von Silangruppen geeignete Katalysatoren C) sind auch quaternäre Ammonium- und Phosphoniumpolyfluoride, wie sie z. B. aus der EP-A0 798 299, EP-A0 896 009 und EP-A0 962 455 als Trimerisierungskatalysatoren für Isocyanatgruppen bekannt sind.

Geeignete Katalysatoren C) sind schließlich auch Zink-Amidin-Komplexe, die nach dem Verfahren der WO 2014/016019 durch Umsetzung eines oder mehrerer Zink(II)biscarboxylate mit Amidinen hergestellt werden können.

Bevorzugte Katalysatoren C) zur Vernetzung von Silangruppen sind saure Phosphorsäureester, Phosphonsäureester und Sulfonsäuren der genannten Art, die gegebenenfalls in mit Aminen blockierter Form vorliegen können, sowie Tetraalkylammoniumcarboxylate der genannten Art. Besonders bevorzugte Katalysatoren C) sind mit Aminen blockierte Phosphorsäureester und Sulfonsäuren sowie die genannten Tetraalkylammoniumcarboxylate. Ganz besonders bevorzugte Katalysatoren C) sind mit Aminen blockierte Phosphorsäurephenylester und Phosphorsäure-bis(2-ethylhexyl)ester, Tetraethylammoniumbenzoat und Tetrabutylammoniumbenzoat.

Neben den vorstehend beispielhaft genannten Katalysatoren C) zur Silanvernetzung können die erfindungsgemäßen Beschichtungsmittel gegebenenfalls zusätzlich auch in der Isocyanatchemie übliche Urethanisierungskatalysatoren enthalten, die die Umsetzung der Isocyanantgruppen der Vernetzerkomponente B) mit den Hydroxylgruppen der Polyolkomponente A) beschleunigen, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Zirkonium(IV)-isopropylat, Zirkonium(IV)-n-butylat, Zirkonium(IV)-2-ethylhexanoat, Zirkonyloctanoat, Wismut(III)-2-ethylhexanoat, Wismut(III)-octoat oder Molybdänglykolat.

Die Katalysatoren C) kommen in den erfindungsgemäßen Beschichtungsmitteln als Einzelsubstanz oder in Form beliebiger Gemische untereinander in Mengen von 0,005 Gew.-% bis zu 5 Gew.-%, vorzugsweise von 0,005 Gew.-% bis zu 2 Gew.-%, besonders bevorzugt von 0,005 Gew.-% bis zu 1 Gew.-%, berechnet als Summe aller eingesetzten Katalysatoren C) und bezogen auf die Gesamtmenge aus Polyolkomponente A) und Vernetzerkomponente B) und zum Einsatz.

Die erfindungsgemäßen Beschichtungsmittel können gegebenenfalls weitere Hilfs- und Zusatzstoffe D) enthalten. Hierbei handelt es sich insbesondere um die dem Fachmann aus der Lacktechnologie bekannten Hilfs- und Zusatzstoffe, wie z. B. Lösungsmittel, UV-Stabilisatoren, Antioxidantien, Wasserfänger, Verlaufsmittel, Rheologieadditive, Slipadditive, Entschäumer, Füllstoffe und/oder Pigmente.

Zur Verringerung der Verarbeitungsviskosität können die erfindungsgemäßen Beschichtungsmittel beispielsweise mit üblichen organischen Lösungsmitteln D1) verdünnt werden. Hierfür geeignete Lösungsmittel sind beispielsweise die bereits vorstehend bei Herstellung der Vernetzerkomponente B) als gegebenenfalls mitzuverwendende Lösungsmittel beschriebenen Lacklösungsmittel, die sich gegenüber den reaktiven Gruppen der Beschichtungsmittelbestandteile chemisch inert verhalten und einen Wassergehalt von höchstens 1,0 Gew.-%, besonders bevorzugt höchstens 0,5 Gew.-% bezogen auf eingesetztes Lösungsmittel aufweisen.

Geeignete UV-Stabilisatoren D2) können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten UV-Stabilisatoren können sowohl einzeln als auch in beliebigen Kombinationen untereinander zum Einsatz kommen.

Gegebenenfalls werden ein oder mehrere der beispielhaft genannten UV-Stabilisatoren D2) der erfindungsgemäßen Beschichtungsmittel vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf die Gesamtmenge aus Polyisocyanatkomponente A) und hydroxyfunktioneller Bindemittelkomponente B) zugesetzt.

Geeignete Antioxidantien D3) sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien D3) werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf die Gesamtmenge aus Polyolkomponente A) und Vernetzerkomponente B) eingesetzt.

Um eine vorzeitige Vernetzung der Silangruppen in den erfindungsgemäßen Beschichtungsmitteln zu unterbinden, kann der Zusatz von Wasserfängern D4), beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von 0,01 Gew.-% bis zu 5 Gew.-%, vorzugsweise von 0,01 Gew.-% bis zu 2 Gew.-%, bezogen auf die auf die Gesamtmenge aus Polyolkomponente A) und Vernetzerkomponente B) zum Einsatz.

Zur Verbesserung der Substratbenetzung können die erfindungsgemäßen Beschichtungsmittel gegebenenfalls geeignete Verlaufsmittel D5), beispielsweise organisch modifizierte Siloxane, wie z. B. Polyethermodifizierte Siloxane, Polyacrylate und/oder Fluortenside, enthalten. Diese Verlaufsmittel kommen, falls überhaupt, in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, bezogen auf die auf die Gesamtmenge aus Polyolkomponente A) und Vernetzerkomponente B) zum Einsatz.

Zur Optimierung der Applikationssicherheit, insbesondere um zu vermeiden, dass der Lack bei der Applikation an senkrechten Flächen der zu beschichteten Objekte abläuft, können die erfindungsgemäßen Beschichtungsmittel gegebenenfalls geeignete Rheologieadditive D6), beispielsweise kolloidale Kieselsäuren, sehr feinteilige Bentonite, mikrokristalline Polyethylen-Wachse, Polyamid-Dispersionen und/oder kristalline Harnstoffe, enthalten. Bevorzugte Rheologieadditive D6) sind kristalline Harnstoffe, wie z. B. das Umsetzungsprodukt von zwei Molen Benzylamin mit einem Mol HDI, die als sag control agents (SCA) üblicherweise der Polyolkomponente beigemischt werden. Im Markt sind eine Reihe unterschiedlicher, bereits mit SCA modifizierter Polyole, beispielsweise auf Polyester- oder auf Polyacrylat-Basis, kommerziell verfügbar, die als Bestandteil der Polyolkomponente A) in den erfindungsgemäßen Beschichtungsmitteln zur Verbesserung der rheologischen Eigenschaften eingesetzt werden können.

Die in den erfindungsgemäßen Beschichtungsmitteln ebenfalls als weitere Hilfs- und Zusatzstoffe D) gegebenenfalls enthaltenen Slipadditive, Entschäumer, Füllstoffe und/oder Pigmente sind dem Fachmann bekannt und kommen falls überhaupt in den in der Lacktechnologie üblichen Mengen zum Einsatz. Eine ausführliche Übersicht über derartige geeignete Hilfs- und Zusatzstoffe findet sich beispielsweise in Bodo Müller, "Additive kompakt", Vincentz Network GmbH & Co KG (2009).

Zur Herstellung der erfindungsgemäßen Beschichtungsmittel werden die beschriebenen Komponenten A), B), C) und gegebenenfalls D) in beliebiger Reihenfolge nacheinander oder gemeinsam vorzugsweise mit Hilfe geeigneter Mischaggregate innig vermischt bis eine homogene Lösung vorliegt. Dabei kommen die Polyolkomponente A), die mindestens ein unter Verwendung von TACD hergestelltes Polyesterpolyol A1), und die Vernetzerkomponente B) üblicherweise in solchen Mengen zum Einsatz, dass auf jede Isocyanatgruppe der Vernetzerkomponente B) 0,5 bis 3,0, vorzugsweise 0,6 bis 2,0, besonders bevorzugt 0,8 bis 1,6 Hydroxylgruppen der Polyolkomponente A) entfallen.

Die Katalysatorkomponente C) sowie die gegebenenfalls mitzuverwendenden weiteren Hilfs- und Zusatzstoffe D) können dabei gegebenenfalls bereits vor dem eigentlichen Vermischen der Reaktivkomponenten entweder der Polyolkomponente A) oder einem Bestandteil A1) und/oder gegebenenfalls A2) der Polyolkomponente und/oder der Vernetzerkomponente B) zugesetzt werden, wobei die Katalysatorkomponente C) zur Vermeidung einer vorzeitigen Silankondensation besonders bevorzugt der Polyolkomponente A) zugesetzt wird.

Die Applikation der so erhaltenen erfindungsgemäßen Beschichtungsmittel, die Silangruppen enthaltende Polyisocyanate als Vernetzungsmittel enthalten, kann nach an sich bekannten Methoden erfolgen, beispielsweise durch Spritzen, Streichen, Tauchen, Fluten oder mit Hilfe von Walzen oder Rakeln in einer oder mehrerer Schichten.

Als Untergründe kommen dabei beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen, bekannten Grundierungen, Füllerlackierungen, Basislackierungen und/oder Klarlackierungen versehen werden können.

Bevorzugt finden die erfindungsgemäßen Beschichtungsmittel in Einsatzgebieten Verwendung, in denen an eine Beschichtung hohe Anforderungen an die optische Qualität und Beständigkeit gegenüber mechanischer Verkratzung gestellt werden. Hierzu zählen insbesondere dekorative, schützende und/oder effektgebende, hoch kratzfeste Beschichtungen und Lackierungen von Kraftfahrzeugkarosserien, wie z. B. Motorrädern, Bussen, LKW oder PKW oder von Teilen hiervon. Ganz besonders eignen sich die erfindungsgemäßen Beschichtungsmittel zur Herstellung von Beschichtungen und Lackierungen, insbesondere von Klarlacken, in der Autoreparaturlackierung sowie in der Automobilserienlackierung (OEM).

Bevorzugt werden die erfindungsgemäßen Beschichtungsmittel dabei auch in der Klar- oder Decklackschicht von Mehrschichtaufbauten eingesetzt, insbesondere bei mehrstufigen Beschichtungsverfahren, bei denen auf ein gegebenenfalls vorbeschichtetes Substrat zunächst eine pigmentierte Basislackschicht und danach eine Schicht des erfindungsgemäßen Beschichtungsmittels aufgetragen werden.

Eine weiterer Gegenstand der vorliegenden Erfindung betrifft ein Verfahren zur Beschichtung von Oberflächen, enthaltend die Schritte
a) Aufbringen des erfindungsgemäßen Beschichtungsmittels auf ein Substrat; und
b) Aushärten des Beschichtungsmittels.

Vorzugsweise werden die erfindungsgemäßen Beschichtungsmittel nach Methoden der Spritzapplikation verarbeitet, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Das Vermischen der Einzelbestandteile der erfindungsgemäßen Beschichtungsmittel, insbesondere der miteinander reaktiven Komponenten A) und B) erfolgt in diesen Spritzapplikationsanwendungen vorzugsweise erst unmittelbar vor der Verarbeitung und kann vorteilhafterweise in sogenannten 2-Komponentenanlagen erfolgen.

Die Aushärtung der erfindungsgemäßen Beschichtungsmittel kann unmittelbar im Anschluss an die Applikation oder nach Einhalten einer bestimmten Ablüftzeit erfolgen. Die Ablüftzeit dient beispielsweise zum Verlauf und zur Entgasung der Lackschichten oder zum Verdunsten flüchtiger Bestandteile, wie z. B. Lösungsmittel. Die erforderliche Dauer der Ablüftzeit kann beispielsweise durch Anwendung erhöhter Temperaturen und/oder durch eine reduzierte Luftfeuchte gezielt gesteuert werden.

Die endgültige Aushärtung der applizierten erfindungsgemäßen Beschichtungsmittel erfolgt schließlich nach üblichen und bekannten Methoden, wie z. B. Erhitzen in einem Umluftofen, Bestrahlen mit IR-Lampen oder nahem Infrarot (NIR-Strahlung), vorzugsweise in einem Temperaturbereich von 30 bis 200°C, besonders bevorzugt 40 bis 190°C und ganz besonders bevorzugt 50 bis 180°C während einer Zeit von 1 min bis zu 12 h, besonders bevorzugt 2 min bis zu 6 h und ganz besonders bevorzugt 3 min bis 4 h.

Bevorzugt wird das Verfahren zur Beschichtung von Oberflächen in den weiter oben genannten Anwendungsgebieten eingesetzt.

Die auf diese Weise aus den erfindungsgemäßen Beschichtungsmitteln hergestellten Beschichtungen, die vorzugsweise Klarlacke darstellen, zeichnen sich durch eine außerordentlich hohe Kratzbeständigkeit sowie eine sehr gute Lösungsmittel- und Chemikalienbeständigkeit aus.

Ein weiterer Gegenstand der vorliegenden Erfindung ist die Verwendung der erfindungsgemäßen Beschichtungsmittel zur Herstellung von Beschichtungen und Lackierungen.

Bevorzugt werden besagte Beschichtungen und Lackierungen zur Herstellung von Klarlacken verwendet.

Besonders bevorzugt ist eine Verwendung der erfindungsgemäßen Beschichtungsmittel zur Herstellung von Beschichtungen und Lackierungen in der Autoreparaturlackierung und in der Automobilserienlackierung.

Ein weiterer Gegenstand der vorliegenden Erfindung sind Substrate, die mit einem oder mehreren erfindungsgemäßen Beschichtungsmitteln beschichtet sind.

Das Substrat ist vorzugsweise ausgewählt aus der Gruppe bestehend aus Metall, Holz, Holzwerkstoffen, Glas, Stein, keramischen Materialien, mineralischen Baustoffen, harten und flexiblen Kunststoffen, Textilien, Leder und Papier.

Die folgenden Beispiele dienen dazu, die Erfindung zu illustrieren. Sie sind nicht dazu gedacht, den Schutzbereich der Ansprüche in irgendeiner Weise zu beschränken.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Bestimmung der Auslaufzeit erfolgte nach DIN EN ISO 2431:2012-03 mit Hilfe eines ISO Auslaufbechers mit 5 mm Düse.

Zur Herstellung von Automobilklarlacken wurden die im Folgenden beschriebenen Polyole jeweils mit einer 10 %igen Lösung eines handelsüblichen Verlaufsadditivs in Butylacetat (BYK 331; BYK-Chemie GmbH, Wesel, DE), den Lichtstabilisatoren Tinuvin 292 und Tinuvin 384-2, jeweils als 50 %ige Lösung in MPA, (BASF SE, Ludwigshafen, DE) sowie im Falle der erfindungsgemäßen Formulierungen aus Beispiel 2 und 4 Tetraethylammoniumbenzoat (Sigma-Aldrich Chemie GmbH, München, DE) als 50 %ige Lösung in Butanol als Katalysator C) durch intensives Rühren bei Raumtemperatur homogen vermischt. In diese Stammlackkomponente wurden die jeweiligen Polyisocyanate eingerührt und der Festkörper der fertigen Beschichtungsmittel mit Methoxypropylacetat auf eine Auslaufzeit von ca. 28 s eingestellt.

Tabelle 1 zeigt die Zusammensetzungen der einzelnen Formulierungen.

Zur Bestimmung der Pendeldämpfung nach König (nach DIN EN ISO 1522) und Prüfung der Lösungsmittelbeständigkeit wurden die Beschichtungsmittel jeweils mittels Fließbecherpistole auf Glasplatten aufgebracht und nach 10 minütigem Ablüften bei Raumtemperatur innerhalb von 22 Minuten bei 140°C ausgehärtet.

Zur Prüfung der Beschichtungen auf Lösungsmittelbeständigkeit wurden jeweils kleine Mengen der Lösungsmittel Xylol (X), 1-Methoxypropyl-2-acetat (MPA), Ethylacetat (EA) und Aceton (A) in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche des auf Glas applizierten Lackfilms gebracht und verblieben dort für 5 Min. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in der Reihenfolge X, MPA, EA und A in Form vier aufeinanderfolgender Ziffern.

Die Prüfung der Kratzbeständigkeit sowie der Beständigkeit gegenüber Kraftstoffen und Chemikalien erfolgte am kompletten OEM-Mehrschichtaufbau auf Stahlblech.

Hierzu wurden die Beschichtungsmittel mittels einer Fließbecherpistole als Klarlacke auf KTL-Bleche appliziert, die zuvor mit einem handelsüblichen 1K-OEM-Hydrofüller und einem konventionellen schwarzen 1K-OEM-Hydrobasislack beschichtet worden waren. Während der Hydrofüller durch 20 minütiges Einbrennen bei 165°C vollständig ausgehärtet war, wurde der Hydrobasislack lediglich für 10 Minuten bei 80°C vorgetrocknet. Nach dem Aufbringen der Klarlacke wurden die Basislackschicht und die Klarlackschicht gemeinsam innerhalb von 22 Minuten bei 140°C gehärtet.

Die Naßverkratzung wurde mit einer Amtec-Kistler-Laborwaschanlage nach DIN EN ISO 20566 durchgeführt, die Trockenverkratzung mit einem Crockmeter und Polishing Paper nach DIN 55654, Methode A (Reibzapfengeometrie Quader, Basisfläche (22mm x 22mm), Prüfkraft (22,0 ± 0,5) N.

Der Glanz der erhaltenen Beschichtungen wurde reflektometrisch nach DIN EN ISO 2813 im 20°-Winkel gemessen.

Angegeben wird der Glanzverlust in Gloss Units (GU) nach Verkratzung (10 Zyklen). Je geringer der Glanzverlust in GU, desto widerstandsfähiger ist die Beschichtung gegen Nassverkratzung.

Als Maß für die Beständigkeit gegen Kraftstoffe wurde ein FAM-Test durchgeführt. Dabei wurde ein kleiner, mit FAM-Lösung nach DIN 51604-1 als Prüfsubstanz getränkter Wattebausch auf die Lackoberfläche gelegt und zur Vermeidung von Verdunstung mit einem Uhrglas abgedeckt. Nach einer Belastungsdauer von 10 min wurde die mit Prüfsubstanz getränkte Watte entfernt, die belastete Stelle abgetrocknet und sofort visuell und manuell durch Abtasten und Kratzen abgemustert. Erweichung bzw. Verfärbung der Lackoberfläche werden wie folgt bewertet:
0 = keine Veränderungen; 1 = Quellungsring, Oberfläche hart, nur sichtbare Veränderung / Spur einer Farbtonveränderung; 2 = Quellungsring, geringe Erweichung / leichte Farbtonveränderung, 3 = deutliche Erweichung (evtl. geringe Blasenbildung) / mittlere Farbtonveränderung / ankratzbar; 4 = starke Erweichung (evtl. starke Blasenbildung), durchritzbar bis zum Untergrund / starke Farbtonveränderung; 5 = Beschichtung komplett zerstört ohne Fremdeinwirkung / sehr starke Farbtonveränderung.

Die Prüfung der Chemikalienbeständigkeit mittels Gradientenofen wurde nach DIN EN ISO 2812-5:2007-05 durchgeführt.

Tabelle 2 zeigt die Ergebnisse der anwendungstechnischen Prüfungen im Vergleich, jeweils ermittelt nach einer Lagerzeit von 24 h bei 23°C.

### Verwendete Ausgangsverbindungen

### Desmodur N 3390 BA/SN:

Aliphatisches Polyisocyanuratpolyisocyanat auf Basis von HDI (Covestro Deutschland AG, Leverkusen), 90 %ige Lösung in n-Butylacetat / Solventnaphtha 100 (1 : 1), NCO-Gehalt: 19,6 %, Viskosität bei 23°C: 550 mPas.

### Silanfunktionelles Polyisocyanat P1:

42,0 Gew.-Teile eines handelsüblichen lösemittelfreien Polyisocyanuratpolyisocyanates auf Basis von HDI (Desmodur N 3300, Covestro Deutschland AG, Leverkusen) mit einem NCO-Gehalt von 21,8 % und einer Viskosität bei 23°C von 3000 mPas wurden gemeinsam mit 36,0 Gew.-Teilen n-Butylacetat bei 25°C vorgelegt und innerhalb von 120 min mit einem Gemisch aus 2,0 Gew.-Teilen N-[3-(Trimethoxysilyl)-propyl]butylamin und 20,0 Gew.-Teilen Bis[3-(trimethoxysiIyl)-propyl]amin versetzt. Nach einer Nachrührzeit von 30 min lag ein Silangruppen enthaltendes Polyisocyanat vor. Der NCO-Gehalt der Lösung betrug 6,3 %, die Viskosität der 64 %igen Lösung betrug bei 23°C 90 mPas.

### Eastman Tetrashield IC3020:

Polyesterpolyol auf Basis von 2,2,4,4-Tetramethylcyclobutan-1,3-diol (TMCD) (Eastman Chemical Company, Kingsport (TN), US), 75 %ige Lösung in n-Butylacetat, OH-Zahl (bezogen auf Lieferform): 150 mg KOH/g, Viskosität bei 23°C: ca. 6000 mPas.

### Setalux 91767 VX-60:

Sag control agent-modifiziertes Polyacrylatpolyol (Allnex Germany GmbH, Bitterfeld-Wolfen, DE), 60 %ige Lösung in Solventnaphtha / Xylol (76 / 24), OH-Zahl (bezogen auf Lieferform): 90 mg KOH/g.

### Setalux D A 665 BA/X

Polyacrylatpolyol (Allnex Germany GmbH, Bitterfeld-Wolfen, DE), 65 %ige Lösung in Butylacetat / Xylol (75 : 25), OH-Zahl: 150 mg KOH/g (bezogen auf Lieferform), Viskosität bei 23°C: ca. 2400 mPas.

**Tabelle 1: Klarlackformulierungen. Alle Angaben in Gew.-Teilen wenn nicht anders angegeben.**

| **Beispiel** | **1** (Vergleich | **2** | **3** (Vergleich | **4** | **5** (Vergleich |
|---|---|---|---|---|---|
| **Komponente A** | | | | | |
| Eastman Tetrashield IC3020 | 90,89 | 60,25 | 76,43 | 51,02 | --- |
| Setalux 91767 VX-60 | --- | --- | 23,89 | 15,84 | 26,11 |
| Setalux D A 665 BA/X | --- | --- | --- | --- | 96,41 |
| Byk 331, 10%ig in BA | 0,23 | 0,23 | 0,23 | 0,23 | 0,23 |
| Tinuvin 292, 50% in MPA | 2,30 | 2,30 | 2,30 | 2,30 | 2,30 |
| Tinuvin 384-2, 50% in MPA | 3,45 | 3,45 | 3,45 | 3,45 | 3,45 |
| Tetraethylammoniumbenzoat, 50% in Butanol | --- | 2,30 | --- | 2,30 | --- |
| Methoxypropylacetat (MPA) | 48,76 | 22,34 | 44,64 | 20,03 | 29,89 |

| **Komponente B** | | | | | |
|---|---|---|---|---|---|
| Desmodur N 3390 BA/SN | 52,07 | --- | 52,86 | --- | 45,41 |
| Polyisocyanat P1) | --- | 109,13 | --- | 111,54 | --- |
| Methoxypropylacetat (MPA) | 10,50 | --- | 5,00 | --- | 41,68 |

| **Beschreibung** | | | | | |
|---|---|---|---|---|---|
| Summe Gew.-Teile | 208,20 | 200,0 | 208,8 | 206,81 | 245,48 |
| NCO:OH | 1:1 | 1:1 | 1:1 | 1:1 | 1:1 |
| Feststoffgehalt bei Applikation [%] | 57,3 | 59,6 | 57,1 | 57,6 | 48,6 |

**Tabelle 2: Prüfergebnisse**

| **Beispiel** | | **1** (Vergleich) | **2** | **3** (Vergleich) | **4** | **5** (Vergleich) |
|---|---|---|---|---|---|---|
| *Prüfungen auf Glasplatte gemäß Beschreibung* | | | | | | |
| Schichtstärke auf Glas | [µm] | 51 | 50 | 46 | 51 | 44 |
| **Pendelhärte** | [s] | 212 | 209 | 214 | 213 | 204 |
| **Anlösbarkeit** 5' (X, MPA, EA, A) | (0-5) | 0024 | 0000 | 0022 | 0001 | 0024 |

| *Prüfungen am Komplettaufbau KTL*/*Füller*/*Basislack*/*Klarlack gemäß Beschreibung* | | | | | | |
|---|---|---|---|---|---|---|
| **FAM-Test 10 min.** | (0-5) | 2 | 1 | 1 | 1 | 2 |

| **Naßverkratzung** | | | | | | |
|---|---|---|---|---|---|---|
| Ausgangsglanz 20° | [GU] | 86 | 88 | 88 | 88 | 90 |
| Glanz nach Verkratzung 20° | [GU] | 47 | 74 | 55 | 74 | 62 |
| Glanzverlustnach 10 Zyklen | Δ | 39 | 14 | 33 | 14 | 28 |
| Glanz nach Erholung 2h 60°C 20° | [GU] | 51 | 77 | 59 | 77 | 81 |
| Restglanz vor Erholung | [rel. %] | 55 | 84 | 63 | 84 | 69 |
| Restglanz nach Erholung | [rel. %] | 59 | 88 | 67 | 88 | 90 |

| **Trockenverkratzung Crockmeter (Polierpapier)** | | | | | | |
|---|---|---|---|---|---|---|
| Ausgangsglanz 20° | [GU] | 86 | 88 | 88 | 88 | 90 |
| Glanz nach Verkratzung 20° | [GU] | 15 | 59 | 30 | 53 | 30 |
| Glanzverlustnach 10 Zyklen | Δ | 71 | 29 | 58 | 35 | 60 |
| Glanz nach Erholung 2h 60°C 20° | [GU] | 21 | 68 | 39 | 65 | 77 |
| Restglanz vor Erholung | [rel. %] | 17 | 67 | 34 | 60 | 33 |
| Restglanz nach Erholung | [rel. %] | 24 | 77 | 44 | 74 | 86 |

| **Chemikalienbeständigkeit Gradientenofen** | | | | | | |
|---|---|---|---|---|---|---|
| Baumharz | [°C] | 42 | >68 | 52 | >68 | 40 |
| Pankreatin | [°C] | 36 | 36 | 40 | 36 | 36 |
| Dest. Wasser | [°C] | 49 | 50 | 62 | 64 | >68 |
| Natronlauge, 1 %ig | [°C] | 50 | 50 | 54 | 44 | 48 |
| Schwefelsäure, 1%ig | [°C] | 48 | 44 | 45 | 43 | 44 |

Sämtliche Lacke härteten zu harten, hochglänzenden Beschichtungen aus. Gegenüber dem ausschließlich mit Polyacrylatpolyolen formulierten Vergleichslack aus Beispiel 5 zeigten sämtliche Lacke, die das Polyesterpolyol auf Basis von 2,2,4,4-Tetramethylcyclobutan-1,3-diol enthielten (Beispiele 1 bis 4, erfindungsgemäß und Vergleich) eine verbesserte Chemikalienbeständigkeit. Während die mit dem Standard-Polyisocyanat vernetzten Vergleichslacke aus Beispiel 1 und 3 gegenüber dem TMCD-freien Vergleichslack aus Beispiel 5 eine erheblich reduzierte Kratzbeständigkeit aufwiesen, lag die Kratzbeständigkeit der erfindungsgemäßen Lackfilme (Beispiel 2 und 4), insbesondere bei Naßverkratzung auf ähnlich hohem Niveau wie der Standard-2K-PUR-Lack (Beispiel 5). Dabei zeigten die beiden erfindungsgemäßen Lackfilme gegenüber sämtlichen Vergleichslacken die geringste Direktverkratzung (höchster Restglanz vor Erholung) sowie die mit Abstand beste Lösemittelbeständigkeit und Baumharzbeständigkeit.

## Patentansprüche

1. Beschichtungsmittel enthaltend
A) mindestens eine Polyolkomponente,
B) mindestens eine, durch Umsetzung mindestens eines Polyisocyanats mit mindestens einem aminofunktionellen Alkoxysilan erhaltene Vernetzerkomponente mit freien und/oder blockierten Isocyanatgruppen, gegebenenfalls
C) mindestens einen Katalysator zur Vernetzung von Silangruppen und
D) gegebenenfalls weitere Hilfs- und Zusatzstoffe,
**dadurch gekennzeichnet, dass** die Polyolkomponente A) mindestens ein Polyesterpolyol A1) umfasst, das unter Verwendung eines 2,2,4,4-Tetraalkylcyclobutan-1,3-diols (TACD) der allgemeinen Formel (I) 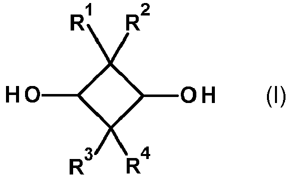 hergestellt wurde, in welcher die Reste R¹, R², R³ und R⁴ unabhängig voneinander für lineare oder verzweigte Alkylreste mit bis zu 8 Kohlenstoffatomen stehen.

2. Beschichtungsmittel gemäß Anspruch 1, **dadurch gekennzeichnet, dass** die Reste R¹, R², R³ und R⁴ in der allgemeinen Formel (I) unabhängig voneinander für lineare oder verzweigte Alkylreste mit bis zu 6 Kohlenstoffatomen, besonders bevorzugt bis zu 4 Kohlenstoffatomen stehen.

3. Beschichtungsmittel gemäß Anspruch 1 und 2, **dadurch gekennzeichnet, dass** die Reste R\ R², R³ und R⁴ in der allgemeinen Formel (I) jeweils für einen Methylrest stehen.

4. Beschichtungsmittel gemäß einem der Ansprüche 1 bis 3, **dadurch gekennzeichnet, dass** bei der Herstellung des Polyesterpolyols A1) 2,2,4,4-Tetraalkylcyclobutan-1,3-diole (TACD) der allgemeinen Formel (I) in solchen Mengen zum Einsatz kommen, dass der TACD-Anteil an der Gesamtmenge der eingesetzten mehrwertigen Alkohole mindestens 10 mol-% beträgt.

5. Beschichtungsmittel gemäß einem der Ansprüche 1 bis 4, **dadurch gekennzeichnet, dass** die Polyesterpolyole A1) einen Hydroxylgruppen-Gehalt von 1,5 bis 15 Gew.-%, eine Säurezahl von 0 bis 80 mg KOH/g und zahlenmittlere Molekulargewichte (Mn) von 300 bis 10000 g/mol aufweisen.

6. Beschichtungsmittel gemäß einem der Ansprüche 1 bis 5, **dadurch gekennzeichnet, dass** die Polyolkomponente A) weitere, von A1) unterschiedliche Polyole A2), wie z. B. TACD-freie Polyesterpolyole, Polyetherpolyole, Polycarbonatpolyole und/oder Polyacrylatpolyole, oder beliebige Abmischungen solcher Polyole umfasst, wobei der Anteil der Polyesterpolyole A1) an der gesamten Polyolkomponente A) mindestens 10 Gew.-% beträgt.

7. Beschichtungsmittel gemäß einem der Ansprüche 1 bis 6, **dadurch gekennzeichnet, dass** zur Herstellung der Vernetzerkomponente B) Isocyanuratgruppen enthaltende Polyisocyanate mit aliphatisch und/oder cycloaliphatisch gebundenen Isocyanatgruppen und/oder Isocyanurat- und/oder Urethangruppen enthaltende Polyisocyanate auf Basis von 2,4- und 2,6-Diisocyanatotoluol zum Einsatz kommen.

8. Beschichtungsmittel gemäß einem der Ansprüche 1 bis 6, **dadurch gekennzeichnet, dass** zur Herstellung der Vernetzerkomponente B) Polyisocyanate auf Basis von 1,5-Diisocyanatopentan, 1,6-Diisocyanatohexan, 1-Isocyanato-3,3,5-trimethyl-5-isocyanatomethylcyclohexan und/oder 4,4'-Diisocyanatodicyclohexylmethan zum Einsatz kommen.

9. Beschichtungsmittel gemäß einem der Ansprüche 1 bis 8, **dadurch gekennzeichnet, dass** zur Herstellung der Vernetzerkomponente B) Aminosilane, der allgemeinen Formel (II) 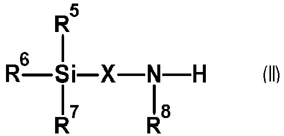 zum Einsatz kommen, in welcher
R⁵, R⁶ und R⁷ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht, der gegebenenfalls bis zu 2 Iminogruppen (-NH-) enthalten kann,
und
R⁸ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 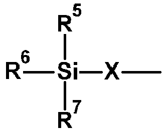 steht, in welchem R⁵, R⁶, R⁷ und X die vorstehend angegebene Bedeutung haben.

10. Beschichtungsmittel gemäß einem der Ansprüche 1 bis 9, **dadurch gekennzeichnet, dass** als Aminosilane zur Herstellung der Vernetzerkomponente B) N-Methyl-3-aminopropyltrimethoxysilan, N-Methyl-3-aminopropyltriethoxysilan, N-(n-Butyl)-3-amino-propyltrimethoxysilan, N-(n-Butyl)-3-aminopropyltriethoxysilan, Bis(3-trimethoxysilylpropyl)amin, Bis(3-triethoxysilylpropyl)amin oder Mischungen aus mindestens zwei solcher Aminosilane zum Einsatz kommen.

11. Beschichtungsmittel gemäß einem der Ansprüche 1 bis 8, **dadurch gekennzeichnet, dass** zur Herstellung der Vernetzerkomponente B) Aminosilane, der allgemeinen Formel (III) 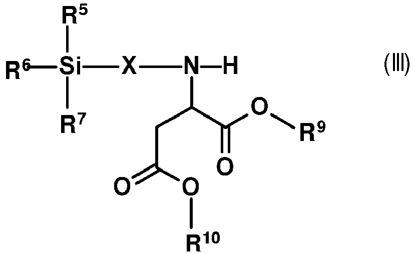 zum Einsatz kommen, in welcher R⁵, R⁶ und R⁷ die in Anspruch 9 für Formel (II) genannte Bedeutung haben,
X für einen linearen oder verzweigten organischen Rest mit mindestens 2 Kohlenstoffatomen steht und
R⁹ und R¹⁰ unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

12. Beschichtungsmittel gemäß einem der Ansprüche 1 bis 8, **dadurch gekennzeichnet, dass** zur Herstellung der Vernetzerkomponente B) Aminosilane, der allgemeinen Formel (V) 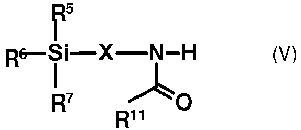 zum Einsatz kommen, in welcher R⁵, R⁶ und R⁷ die in Anspruch 9 für Formel (II) genannte Bedeutung haben,
X für einen linearen oder verzweigten organischen Rest mit mindestens 2 Kohlenstoffatomen und
R¹¹ für einen gesättigten linearen oder verzweigten, aliphatischen oder cycloaliphatischen organischen Rest mit 1 bis 8 Kohlenstoffatomen steht.

13. Beschichtungsmittel gemäß einem der Ansprüche 1 bis 12, **dadurch gekennzeichnet, dass** als Katalysatoren C) Phosphorsäureester, Phosphonsäureester und/oder Sulfonsäuren, die gegebenenfalls in mit Aminen blockierter Form vorliegen können, und/oder Tetraalkylammoniumcarboxylate zum Einsatz kommen.

14. Beschichtungsmittel gemäß einem der Ansprüche 1 bis 13, **dadurch gekennzeichnet, dass** als Katalysatoren C) mit Aminen blockierte Phosphorsäurephenylester und Phosphorsäurebis(2-ethylhexyl)ester, Tetraethylammoniumbenzoat und Tetrabutylammoniumbenzoat zum Einsatz kommen.

15. Verwendung der Beschichtungsmittel gemäß einem der Ansprüche 1 bis 14 zur Herstellung von Beschichtungen.

16. Verwendung der Beschichtungsmittel gemäß einem der Ansprüche 1 bis 14 zur Herstellung von Beschichtungen und Lackierungen, insbesondere Klarlacken, in der Autoreparaturlackierung und Automobilserienlackierung.

17. Mit mindestens einem Beschichtungsmittel gemäß einem der Ansprüche 1 bis 14 beschichtetes Substrat.
